# EUROPEAN PATENT APPLICATION

(11) **EP 4 472 284 A2**
(43) Date of publication of application: **04.12.2024**
(21) Application number: 24174599.1
(22) Date of filing: 07.05.2024
(51) Int. Cl.: H04W 36/00, H04W 36/14, H04W 48/18, H04W 84/06

(54) **CELL SELECTION AND HANDOVER PRIORITIZATION IN A MULTI-DOMAIN NETWORK ENVIRONMENT**

(30) Priority: 11.05.2023 US 202318196351
(71) Applicant: T-Mobile Innovations LLC, Overland Park, KS 66251 (US)
(72) Inventor: MANSOUR, Nagi A., Arlington, 22207 (US); OZOZLU, Akin, McLean, 22102 (US)
(74) Representative: Suddaby, Mark Edward

(57) **Abstract**

Embodiments of the present disclosure are directed to systems and methods for multi-domain cell selection and handover that give a preference to terrestrial radio access network (RAN) nodes over satellite nodes. During cell search and selection, a user equipment (UE) may select a terrestrial base station over a satellite RAN node even though a connection with the satellite node may have better key performance indicators. During handovers, a UE may be instructed to handover to a terrestrial base station earlier than normal based on a determination the UE's serving cell is a satellite, or to handover later than normal based on a determination the serving cell is terrestrial and the neighboring cell is a satellite node.

## Description

### SUMMARY

The present disclosure is directed to cell selection and handover prioritization for terrestrial nodes in a multi-domain network environment, substantially as shown and/or described in connection with at least one of the Figures, and as set forth more completely in the claims.

According to various aspects of the technology, modified cell selection and handover procedures prioritize selection or handover to a terrestrial base station over a satellite or a satellite in a lower orbital plane over a satellite in a higher orbital plane. Multi-domain cellular network environments will become increasingly prevalent, wherein a user equipment (UE) will be able to connect to terrestrial base stations in the ground domain and satellites in one or more orbital planes in the space domain. By prioritizing connection to terrestrial base stations, even when a better connection may exist to a satellite, mobile network operators can preserve limited satellite resources for locations where there is no terrestrial coverage.

This summary is provided to introduce a selection of concepts in a simplified form that are further described below in the detailed description. This summary is not intended to identify key features or essential features of the claimed subject matter, nor is it intended to be used in isolation as an aid in determining the scope of the claimed subject matter.

### BRIEF DESCRIPTION OF THE DRAWINGS

Aspects of the present disclosure are described in detail herein with reference to the attached Figures, which are intended to be exemplary and non-limiting, wherein:
Fig. 1 illustrates an exemplary computing device for use with the present disclosure;
Fig. 2 illustrates a diagram of an exemplary environment in which implementations of the present disclosure may be employed;
Fig. 3 illustrates a diagram of a network environment in which aspects of the multi-domain cell selection and handover of the present disclosure may be carried out;
Fig. 4 depicts a flow diagram of an exemplary method for multi-domain cell selection, in accordance with embodiments described herein; and
Fig. 5 depicts a flow diagram of an exemplary method for multi-domain cell handover, in accordance with embodiments of the present disclosure.

### DETAILED DESCRIPTION

The subject matter of embodiments of the invention is described with specificity herein to meet statutory requirements. However, the description itself is not intended to limit the scope of this patent. Rather, the inventors have contemplated that the claimed subject matter might be embodied in other ways, to include different steps or combinations of steps similar to the ones described in this document, in conjunction with other present or future technologies. Moreover, although the terms "step" and/or "block" may be used herein to connote different elements of methods employed, the terms should not be interpreted as implying any particular order among or between various steps herein disclosed unless and except when the order of individual steps is explicitly described.

Various technical terms, acronyms, and shorthand notations are employed to describe, refer to, and/or aid the understanding of certain concepts pertaining to the present disclosure. Unless otherwise noted, said terms should be understood in the manner they would be used by one with ordinary skill in the telecommunication arts. An illustrative resource that defines these terms can be found in Newton's Telecom Dictionary, (e.g., 32d Edition, 2022). As used herein, the term "network access technology (NAT)" is synonymous with wireless communication protocol and is an umbrella term used to refer to the particular technological standard/protocol that governs the communication between a UE and a base station; examples of network access technologies include 3G, 4G, 5G, 6G, 802.11x, and the like. The term "node" is used to refer to an access point that transmits signals to a UE and receives signals from the UE in order to allow the UE to connect to a broader data or cellular network (including by way of one or more intermediary networks, gateways, or the like)

Embodiments of the technology described herein may be embodied as, among other things, a method, system, or computer-program product. Accordingly, the embodiments may take the form of a hardware embodiment, or an embodiment combining software and hardware. An embodiment takes the form of a computer-program product that includes computer-useable instructions embodied on one or more computer-readable media that may cause one or more computer processing components to perform particular operations or functions.

Computer-readable media include both volatile and nonvolatile media, removable and nonremovable media, and contemplate media readable by a database, a switch, and various other network devices. Network switches, routers, and related components are conventional in nature, as are means of communicating with the same. By way of example, and not limitation, computer-readable media comprise computer-storage media and communications media.

Computer-storage media, or machine-readable media, include media implemented in any method or technology for storing information. Examples of stored information include computer-useable instructions, data structures, program modules, and other data representations. Computer-storage media include, but are not limited to RAM, ROM, EEPROM, flash memory or other memory technology, CD-ROM, digital versatile discs (DVD), holographic media or other optical disc storage, magnetic cassettes, magnetic tape, magnetic disk storage, and other magnetic storage devices. These memory components can store data momentarily, temporarily, or permanently.

Communications media typically store computer-useable instructions - including data structures and program modules - in a modulated data signal. The term "modulated data signal" refers to a propagated signal that has one or more of its characteristics set or changed to encode information in the signal. Communications media include any information-delivery media. By way of example but not limitation, communications media include wired media, such as a wired network or direct-wired connection, and wireless media such as acoustic, infrared, radio, microwave, spread-spectrum, and other wireless media technologies. Combinations of the above are included within the scope of computer-readable media.

By way of background, the provision of telecommunication services is moving beyond the surface of the earth at increasing speed. Network operators, once exclusively operating terrestrial base stations, will begin to utilize satellite communication systems to provide coverage to areas unserved by terrestrial base stations. Because of space launching restrictions on size/weight, the expense of manufacturing a satellite, regulatory pressure, or any other reason, it is likely that the number of satellites used for integration into a cellular telecommunication network will be limited. In contrast, terrestrial base stations are faster and cheaper to deploy, and can be supplied with significantly more power than satellites. Further, it is anticipate that mobile network operators will desire to conserve limited radio resources of a satellite RAN for areas where terrestrial coverage is unavailable or unreliable. Accordingly, in areas where satellite coverage overlaps with coverage from a terrestrial RAN, it may be desirable for a mobile network operator to prioritize connections to a terrestrial base station over satellites - even in circumstances where a UE may normally not attach to the terrestrial base station.

Conventionally, a traditional wireless communication network utilizes synchronization signals to facilitate cell search, selection, reselection, and handover for UEs seeking to establish a wireless connection with the network or to maintain mobility. Conventionally, synchronization signals (or, in some deployments, reference signals) provide timing, frequency, or channel information to a UE. Communicated in signal blocks such as a master information block (MIB) and one or more secondary information blocks (SIBs), existing synchronization signals provide a prospective UE with cell access related information that includes a cell identifier and a public land mobile network (PLMN) identifier, as well as cell selection information that includes whether the node was barred, subcarrier spacing, qRXLevMin, qRXLevMinOffset, qQualMin, and qQualOffset. Though mobile network operators have some discretion in what particular criteria is used to govern cell selection and handover decisions, conventional solutions chiefly focus on selecting or handing over to a cell that is determined to have the best key performance indicators, vis-à-vis the UE, as observed by the UE (and in the case of handovers, communicated to a RAN node using a measurement report). Because terrestrial cellular telecommunication networks have never interfaced with satellite RAN nodes, there has never been occasion to consider tipping the scales under certain circumstances to ensure that a UE connects to a terrestrial RAN node over a satellite node.

In order to ensure a UE attaches to a terrestrial base station over satellites, the present disclosure is directed to systems and methods for prioritizing terrestrial cell selection over satellite cells. During cell search and selection, a UE may select a terrestrial base station over a satellite RAN node even though a connection with the satellite node may have better key performance indicators. During handovers, a UE may be instructed to handover to a terrestrial base station earlier than normal based on a determination the UE's serving cell is a satellite and the target/neighboring cell is a terrestrial base station, or to handover later than normal based on a determination the serving cell is terrestrial and the neighboring cell is a satellite.

Accordingly, a first aspect of the present disclosure is directed to a system for multi-domain cell selection. The system comprises one or more antennas configured to wirelessly communicate with a terrestrial base station and one or more satellites. The system further comprises one or more computer processing components configured to receive a first set of synchronization signals from a first radio access network (RAN) node. The one or more computer processing components are further configured to receive a second set of synchronization signals from a second RAN node. The one or more computer processing components are further configured to determine that each of the first RAN node and the second RAN node are suitable The one or more computer processing components are further configured to communicate a registration request to the second RAN node based at least in part on a determination that the first RAN node is associated with a satellite RAN and the second RAN node is associated with a terrestrial RAN.

A second aspect of the present disclosure is directed to a method for controlling handovers in a cellular telecommunications network. The method comprises receiving a measurement report from a user equipment (UE), the measurement report comprising a serving cell identifier associate with a first radio access network (RAN) node, one or more key performance indicator (KPI) values of a first set of synchronization signals received by the UE from the first RAN node, a neighboring cell identifier associated with a second RAN node, and one or more KPI values of a second set of synchronization signals received by the UE from the second RAN node. The method further comprises determining the one or more KPI values of the first set of synchronization signals is greater than the one or more KPI values of the second set of synchronization signals. The method further comprises communicating a handover instruction to the UE, the handover instruction comprising an indication to the UE to connect to the neighboring cell based at least on a determination that the first RAN node is associated with a satellite RAN.

Another aspect of the technology described herein is directed to a method for controlling handovers in a cellular telecommunications network. The method comprises receiving a measurement report from a user equipment (UE), the measurement report comprising a serving cell identifier associate with a first radio access network (RAN) node, a first reference signal receive power (RSRP) value of a first set of synchronization signals received by the UE from the first RAN node, a neighboring cell identifier associated with a second RAN node, and a second RSRP value of a second set of synchronization signals received by the UE from the second RAN node, wherein the second RSRP value is greater than the first RSRP value. The method further comprises implementing a modified handover procedure based at least in part on a determination that the second RAN node is associated with a satellite RAN, the modified handover procedure causing the UE to remain camped on the first RAN node despite the second RSRP value being greater than the first RSRP value.

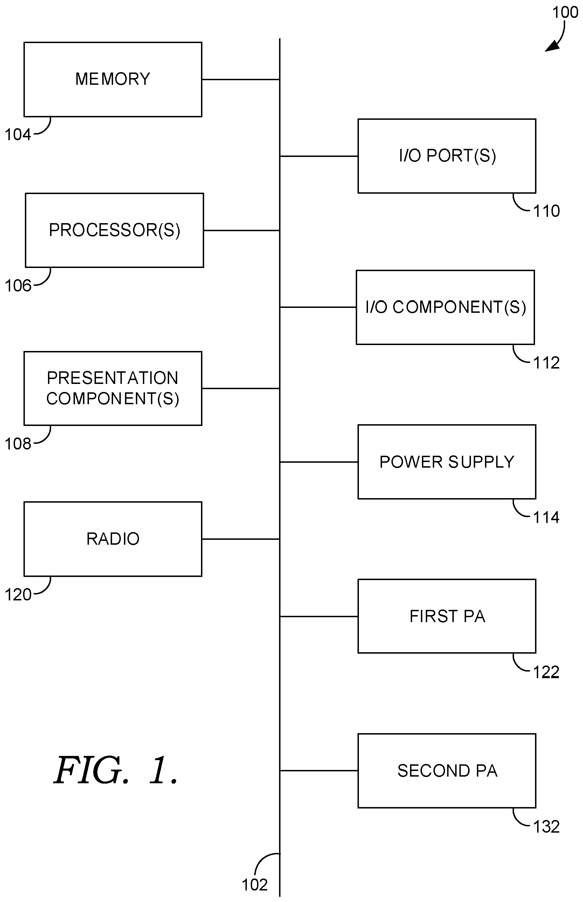

Referring to FIG. 1, an exemplary computer environment is shown and designated generally as computing device 100 that is suitable for use in implementations of the present disclosure. Computing device 100 is but one example of a suitable computing environment and is not intended to suggest any limitation as to the scope of use or functionality of the invention. Neither should computing device 100 be interpreted as having any dependency or requirement relating to any one or combination of components illustrated. In aspects, the computing device 100 is generally defined by its capability to transmit one or more signals to an access point and receive one or more signals from the access point (or some other access point); the computing device 100 may be referred to herein as a user equipment, wireless communication device, or user device, The computing device 100 may take many forms; non-limiting examples of the computing device 100 include a fixed wireless access device, cell phone, tablet, internet of things (IoT) device, smart appliance, automotive or aircraft component, pager, personal electronic device, wearable electronic device, activity tracker, desktop computer, laptop, PC, and the like.

The implementations of the present disclosure may be described in the general context of computer code or machine-useable instructions, including computer-executable instructions such as program components, being executed by a computer or other machine, such as a personal data assistant or other handheld device. Generally, program components, including routines, programs, objects, components, data structures, and the like, refer to code that performs particular tasks or implements particular abstract data types. Implementations of the present disclosure may be practiced in a variety of system configurations, including handheld devices, consumer electronics, general-purpose computers, specialty computing devices, etc. Implementations of the present disclosure may also be practiced in distributed computing environments where tasks are performed by remote-processing devices that are linked through a communications network.

With continued reference to FIG. 1, computing device 100 includes bus 102 that directly or indirectly couples the following devices: memory 104, one or more processors 106, one or more presentation components 108, input/output (I/O) ports 110, I/O components 112, and power supply 114. Bus 102 represents what may be one or more busses (such as an address bus, data bus, or combination thereof). Although the devices of FIG. 1 are shown with lines for the sake of clarity, in reality, delineating various components is not so clear, and metaphorically, the lines would more accurately be grey and fuzzy. For example, one may consider a presentation component such as a display device to be one of I/O components 112. Also, processors, such as one or more processors 106, have memory. The present disclosure hereof recognizes that such is the nature of the art, and reiterates that FIG. 1 is merely illustrative of an exemplary computing environment that can be used in connection with one or more implementations of the present disclosure. Distinction is not made between such categories as "workstation," "server," "laptop," "handheld device," etc., as all are contemplated within the scope of FIG. 1 and refer to "computer" or "computing device."

Computing device 100 typically includes a variety of computer-readable media. Computer-readable media can be any available media that can be accessed by computing device 100 and includes both volatile and nonvolatile media, removable and non-removable media. By way of example, and not limitation, computer-readable media may comprise computer storage media and communication media. Computer storage media includes both volatile and nonvolatile, removable and non-removable media implemented in any method or technology for storage of information such as computer-readable instructions, data structures, program modules or other data. Computer storage media includes RAM, ROM, EEPROM, flash memory or other memory technology, CD-ROM, digital versatile disks (DVD) or other optical disk storage, magnetic cassettes, magnetic tape, magnetic disk storage or other magnetic storage devices. Computer storage media does not comprise a propagated data signal.

Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer-readable media.

Memory 104 includes computer-storage media in the form of volatile and/or nonvolatile memory. Memory 104 may be removable, nonremovable, or a combination thereof. Exemplary memory includes solid-state memory, hard drives, optical-disc drives, etc. Computing device 100 includes one or more processors 106 that read data from various entities such as bus 102, memory 104 or I/O components 112. One or more presentation components 108 presents data indications to a person or other device. Exemplary one or more presentation components 108 include a display device, speaker, printing component, vibrating component, etc. I/O ports 110 allow computing device 100 to be logically coupled to other devices including I/O components 112, some of which may be built in computing device 100. Illustrative I/O components 112 include a microphone, joystick, game pad, satellite dish, scanner, printer, wireless device, etc.

A first radio 120 and second radio 130 represent radios that facilitate communication with one or more wireless networks using one or more wireless links. In aspects, the first radio 120 utilizes a first transmitter 122 to communicate with a wireless network on a first wireless link and the second radio 130 utilizes the second transmitter 132 to communicate on a second wireless link. Though two radios are shown, it is expressly conceived that a computing device with a single radio (i.e., the first radio 120 or the second radio 130) could facilitate communication over one or more wireless links with one or more wireless networks via both the first transmitter 122 and the second transmitter 132. Illustrative wireless telecommunications technologies include CDMA, GPRS, TDMA, GSM, and the like. One or both of the first radio 120 and the second radio 130 may carry wireless communication functions or operations using any number of desirable wireless communication protocols, including 802.11 (Wi-Fi), WiMAX, LTE, 3G, 4G, LTE, 5G, NR, VoLTE, or other VoIP communications. In aspects, the first radio 120 and the second radio 130 may be configured to communicate using the same protocol but in other aspects they may be configured to communicate using different protocols. In some embodiments, including those that both radios or both wireless links are configured for communicating using the same protocol, the first radio 120 and the second radio 130 may be configured to communicate on distinct frequencies or frequency bands (e.g., as part of a carrier aggregation scheme). As can be appreciated, in various embodiments, each of the first radio 120 and the second radio 130 can be configured to support multiple technologies and/or multiple frequencies; for example, the first radio 120 may be configured to communicate with a base station according to a cellular communication protocol (e.g., 4G, 5G, 6G, or the like), and the second radio 130 may configured to communicate with one or more other computing devices according to a local area communication protocol (e.g., IEEE 802.11 series, Bluetooth, NFC, z-wave, or the like).

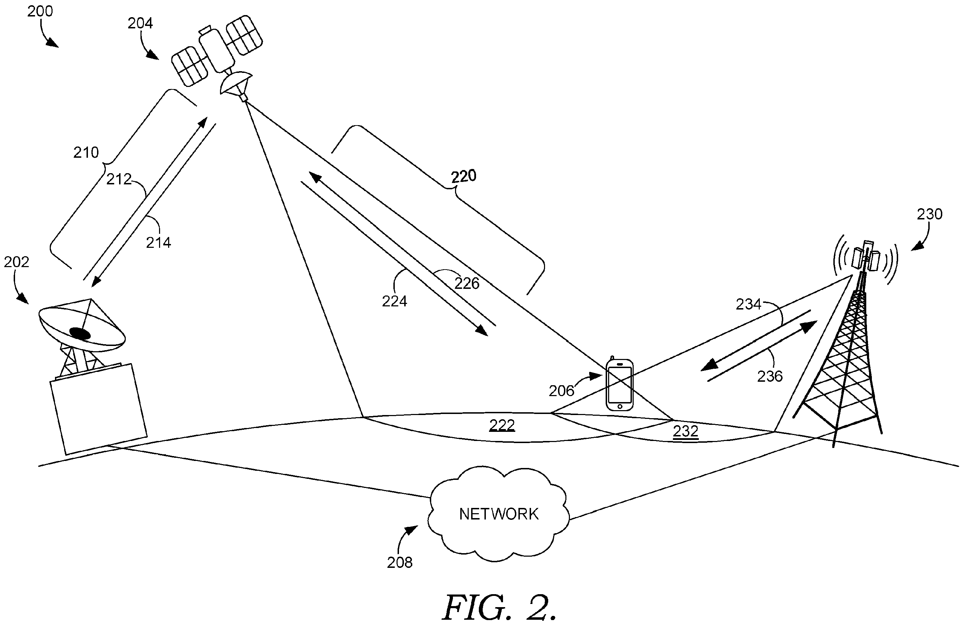

Turning now to Fig. 2, an exemplary network environment is illustrated in which implementations of the present disclosure may be employed. Such a network environment is illustrated and designated generally as network environment 200. At a high level the network environment 200 comprises a gateway 202, a satellite 204 of a satellite radio access network (RAN), a UE 206, a terrestrial base station 230 of a terrestrial RAN, and a network 208. Though the composition of network environment 200 illustrates objects in the singular, it should be understood that more than one of each component is expressly conceived as being within the bounds of the present disclosure; for example, the network environment 200 may comprise multiple gateways, multiple distinct networks, multiple UEs, multiple satellites that communicate with a single gateway, multiple terrestrial base stations, and the like. Similarly, though certain objects of network environment 200 are illustrated in a certain form, it should be understood that they may take other forms; for example, even though the UE 206 is illustrated as a cellular phone, a UE suitable for implementations with the present disclosure may be any computing device having any one or more aspects described with respect to Fig. 1, and even though the terrestrial base station 230 is illustrated as a macro cell mounted on a tower, a terrestrial base station suitable for use with the present disclosure is any terrestrial station configured to transmit signals to and receive signals from the UE 206 (e.g., a small cell, pico cell, relay, and the like).

The network environment 200 includes a gateway 202 communicatively connected to the network 208 and the satellite 204. The gateway 202 may be connected to the network 208 via one or more wireless or wired connections and is connected to the satellite 204 via a feeder link 210. The gateway 202 may take the form of a device or a system of components configured to communicate with the UE 206 via the satellite 204 and to provide an interface between the network 208 and the satellite 204. Generally, the gateway 202 utilizes one or more antennas to transmit signals to the satellite 204 via a forward uplink 212 and to receive signals from the satellite 204 via a return downlink 214. The gateway 202 may communicate with a plurality of satellites, including the satellite 204. The network 208 comprises any one or more public or private networks, any one or more of which may be configured as a satellite network, a publicly switched telephony network (PSTN), or a cellular telecommunications network. In aspects, the network 208 may comprise a satellite network connecting a plurality of gateways (including the gateway 202) to other networks, a cellular core network (e.g., a 4G, 5G, of 6G core network, an IMS network, and the like), and a data network. In such aspects, each of the satellite network and the cellular core network may be associated with a network identifier such as a public land mobile network (PLMN), a mobile country code, a mobile network code, or the like, wherein the network identifier associated with the satellite network is the same or different than the network identifier associated with the cellular network.

The network environment 200 includes one or more satellites, represented by satellite 204. The satellite 204 is generally configured to relay communications between the gateway 202 and the UE 206. The satellite 204 communicates with the gateway using the feeder link 210 and communicates with the UE 206 using a user link 220. The user link 220 comprises a forward downlink 224 used to communicate signals from the satellite 204 to the UE 206 and a return uplink 226 used to communicate signals from the UE 206 to the satellite 204. The satellite 204 may communicate with the UE 206 using any wireless telecommunication protocol desired by a network operator, including but not limited to 3G, 4G, 5G, 6G, 802.11x and the like. Though shown as having a single beam providing coverage to a satellite coverage area 222, the satellite 204 may be configured to utilize a plurality of individual beams to communicate with multiple different areas at or near the same time. Similarly, though a single forward downlink 224 and a single return uplink 226 are illustrated, the UE 206 may utilize multiple downlinks and/or multiple uplinks to communicate with the satellite 204, using any one or more frequencies as desired by a satellite or network operator.

Generally, the satellite 204 is characterized by its orbit around the earth. The orbit of any particular satellite will vary by operator desire and/or intended use; for example, a satellite suitable for use with the present disclosure may be characterized by its maximum orbital altitude and/or orbital period as Low Earth Orbit (LEO), Medium Earth Orbit (MEO), and High Earth Orbit (HEO) - also referred to herein as characterizing an orbital plane. Though not rigidly defined, an LEO satellite may orbit with a maximum orbital altitude of less than approximately 1,250 miles, an MEO satellite may orbit with a maximum orbital altitude generally between 1,250 and 22,000 miles, and an HEO satellite may orbit with a maximum orbital altitude of greater than approximately 22,000 miles. In some, but not all cases, a satellite in HEO may be considered geosynchronous (i.e., geosynchronous earth orbit (GEO)) on the basis that its orbital period is approximately equal to the length of a sidereal or solar day (approximately 24 hours); generally, a satellite in geosynchronous orbit will appear to be in the same position relative to a fixed point on the surface of the earth 208 at the same time each day. A geostationary orbit is a special type of geosynchronous orbit with the Earth's equator with each of an eccentricity and inclination equal to zero. Some satellites in HEO and all that are in LEO or MEO have an orbital period that is different than the length of a sidereal/solar day and are considered to be non-geosynchronous and do not remain stationary relative to a fixed position on the surface of the Earth. As used herein, a satellite in LEO has a lower orbital plane than a satellite in MEO or HEO, an MEO satellite has a higher orbital plane than a satellite in LEO, and an HEO satellite has a higher orbital plane than a satellite in LEO or MEO.

The network environment 200 includes one or more terrestrial base stations, represented by terrestrial base station 230. The terrestrial base station 230 is generally configured to relay communications between the network 208 and one or more UEs, such as the UE 206. The terrestrial base station 230 communicates signals to the UE 206 using a terrestrial downlink 234 and receives signals from the UE 206 using a terrestrial uplink 236. The terrestrial base station 230 may communicate with the UE 206 using any wireless telecommunication protocol desired by a network operator, including but not limited to 3G, 4G, 5G, 6G, 802.11x and the like. Though shown as having a single beam providing coverage to a terrestrial coverage area 232, the terrestrial base station 230 may be configured to utilize a plurality of individual beams to communicate with multiple different areas at or near the same time. Similarly, though a single terrestrial downlink 234 and a single terrestrial uplink 236 are illustrated, the UE 206 may utilize multiple downlinks and/or multiple uplinks to communicate with the terrestrial base station 230, using any one or more frequencies as desired by a mobile network operator.

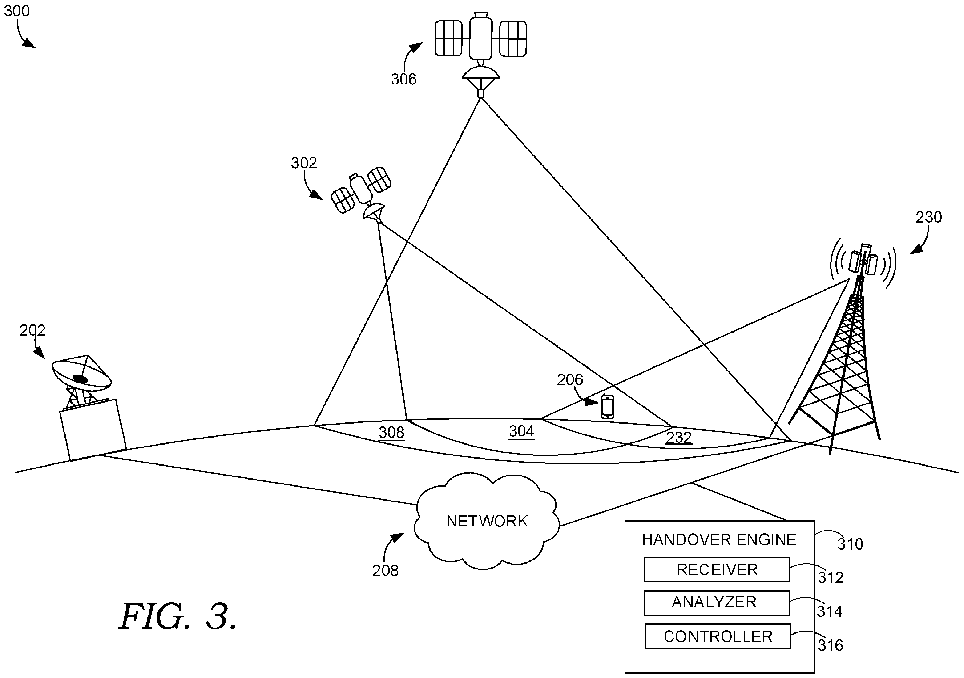

Turning now to Fig. 3, a network environment 300 illustrating prioritized cell selection and handover for terrestrial cells is provided that comprises components of network environment 200 of Fig. 2. The network environment 300 generally comprises one or more satellite RAN nodes such as a first satellite 302 and/or a second satellite 306, the UE 206 of Fig. 2, and the terrestrial base station of Fig. 2. In contrast to conventional cell search and selection, where the UE 206 will acquire synchronization signals from one or more RAN nodes and process the synchronization signals to obtain various information about each available cell that can be used to make a cell selection and connect to the suitable node having the strongest synchronization signals, the present disclosure prioritizes connections to terrestrial RAN nodes, even if a stronger connection may exist with one or more satellite RAN nodes.

In aspects of the present disclosure, the UE 206 may prioritize terrestrial RAN nodes such as the terrestrial base station 230 over satellite RAN nodes. During cell search and selection, the UE 206 may acquire and process a first set of synchronization signals from the first satellite 302 and a second set of synchronization signals from the terrestrial base station 230. In aspects, the UE 206 may only further process synchronization signals from each of the first satellite 302 and the terrestrial base station 230 based on a determination that each of the first satellite 302 and the terrestrial base stations are acceptable (e.g., that it is not barred) and suitable (e.g., having a PLMN or other network identifier that the UE 206 is permitted to access).

The UE 206 may measure the synchronization signals to determine one or more key performance indicators (KPI) of the first set of synchronization signals and of the second set of synchronization signals. In aspects, the one or more KPIs comprise one or more of a reference signal receive power (RSRP), a reference signal receive quality (RSRQ), and a signal to interference noise ratio (SINR). Which of the one or more KPIs used as for cell selection criteria by the UE 206 may be configurable by a mobile network operator or cellular service provider associated with the UE 206 and used in addition with a prioritization of terrestrial RAN nodes.

The UE 206 may process the first set of synchronization signals and the second set of synchronization signals to determine identifying information that can be used to trigger a terrestrial node prioritization. Each of the first set of synchronization signals and the second set of synchronization signals may comprise cell selection information (e.g., in system information block 1 (SIB1)). The UE 206 may process the cell selection information to determine that the first satellite 302 is associated with a first PLMN and that the terrestrial bas station 230 is associated with a second PLMN. Using locally available information, the UE 206 may determine that the first PLMN is associated with a satellite RAN and that the second PLMN is associated with a terrestrial RAN. Based on said determination, the UE 206 may utilize modified cell selection criteria in order to prioritize connection to the terrestrial base station 230; in other aspects, the modified cell selection criteria may be used based on a determination that the first PLMN is a visiting PLMN and the second PLMN is a home PLMN of the UE 206.

The modified cell selection criteria described herein prioritizes selection of terrestrial RAN nodes. In a first aspect, the UE 206 may select and communicate a registration request to the terrestrial base station 230 instead of the satellite 302 based solely on the terrestrial base station 230 being associated with the terrestrial RAN and the satellite 302 being associated with the satellite RAN. In another aspect, the UE 206 may select and communicate the registration request to the terrestrial base station 230 instead of the satellite 302 even though a first set of KPI values of the first set of synchronization signals is preferable to (or greater than) a second set of KPI values of the second set of synchronization signals; for example, the UE 206 may select the terrestrial base station 230 even though the first set of KPI values comprise an RSRP value of - 105 dBm and the second set of KPI values comprises an RSRP value of -110 dBm. In yet other aspects, the prioritization of a weaker connection to the terrestrial base station 230 may be limited, wherein the UE 206 will prioritize the terrestrial base station 230 over the satellite 302 if a delta between the first set of values and the second set of values is less than a predetermined amount (e.g., the UE 206 will not prioritize the terrestrial base station 230 if the RSRP value of the second set of KPI values is more than 5 dBm less than the RSRP value of the first set of KPI values) and/or if the second set of KPI values of the second set of synchronization signals exceeds a predetermined minimum threshold (e.g., the UE 206 will not prioritize the terrestrial base station 230 if an RSRP value is less than -115 dBm).

As illustrated in Fig. 3, the multi-domain prioritized cell selection procedure disclosed herein is suitable for the UE 206 selecting between multiple satellites, with or without a terrestrial base station being available. In an instance where the UE 206 only acquires synchronization signals from the first satellite 304 and a second satellite 306 during cell search, the UE 206 may be configured to select the satellite in the lowest orbital plane (for example because the first satellite 306 a higher altitude orbit than the first satellite 302 and therefore the second satellite coverage area 308 is larger than the first satellite coverage area 304). In instances where the UE 206 acquires synchronization signals from the first satellite 302, the terrestrial base station 230, and the second satellite 206, the UE 206 may select the terrestrial base station 230 - even if a third set of KPI values of the synchronization signals from the second satellite 306 are greater than both the first set of KPI values and the second set of KPI values.

In addition to prioritized cell selection for idle mode UEs, the present disclosure is also suitable for use with handover decisions for connected mode UEs that prioritize terrestrial base stations or the lowest available orbital plane satellite. In embodiments for use with handover decisions, network environment 300 may be said to further comprise a handover engine 310 that comprises a receiver 312, an analyzer 314, and a controller 316. Though illustrated as discrete components, each of the receiver 312, the analyzer 314, and the controller 316 may take the form of one or more computer processing components or the executable instructions thereon.

Conventionally, a network manages handover decisions for a connected UE as it moves through a wireless network. The handover may be generally said to comprise a trigger phase, a measurement phase, a decision phase, and a handover phase. In the trigger phase, a UE obtains information about its serving cell and one or more neighboring cells, as well as one or more KPI values - similar to the information gathered by a UE during cell search in idle mode. In contrast to cell search, which typically occurs when a UE attempts to go from idle mode to connected mode, measurements by the UE for handover purposes may occur in response to a measurement event (e.g., A1, A2, A3, A4, A5, A6, B1, B2, and the like) or are periodically performed. During the measurement phase, the UE communicates with its serving cell regarding the measurements and information obtained during the trigger phase. In the decision phase, one or more components of the network (e.g., a base station component and/or a core network component) make a decision about whether the UE should handover from the serving cell to a target cell; while handover decisions are configured and controlled by mobile network operators, current approaches generally use handover criteria that could include cell load, KPI thresholds, and predictions about UE movement. In the handover phase, RAN and core network components communicate about the handover decision and provide an instruction to the UE to handover to the target cell.

Unlike conventional solutions, the present disclosure adds a handover criteria that prioritizes handovers to terrestrial nodes or deprioritizes handovers to satellite nodes. In a first aspect, and with reference to Fig. 3, the UE 206 may be triggered to perform prioritize a handover to the terrestrial base station 230 when its serving cell is the first satellite 302. In another aspect, the UE 206 may be triggered to deprioritize a handover to the first satellite 302 or the second satellite 306 when the UE 206 is camped on the terrestrial base station 230. In order to perform the multi-domain handover decision disclosed herein, the receiver 312 receives one or more measurement reports from the UE 206, the analyzer 314 processes the one or more handover reports and determines whether the UE 206 should handover (and if so, to which target cell), and the controller 316 communicates with one or more core network components, the target cell, and the UE 206 in order to execute the handover decision.

When connected to the first satellite 302, the UE 206 may be instructed to handover to a neighboring terrestrial base station 230 in contrast to conventional handover criteria (e.g., even if the connection with the first satellite 302 is better and/or the first satellite 302 is less congested). In such a circumstance, the UE 206 may process one or more synchronization signals to determine a cell identifier and one or more KPI values of a set of synchronization signals for it serving cell (the first satellite 302) and at least one neighboring cell, such as the terrestrial base station 230. That is, the UE 206 may communicate the measurement report to the receiver 312 of the handover engine 310, wherein the measurement report comprises a serving cell identifier associate with a first radio access network (RAN) node, one or more key performance indicator (KPI) values of a first set of synchronization signals received by the UE from the first RAN node, a neighboring cell identifier associated with a second RAN node, and one or more KPI values of a second set of synchronization signals received by the UE from the second RAN node. In response, the analyzer 314 of the handover engine 310 may compare the one or more KPI values for the first satellite 302 and the terrestrial base station 230 as well as determine whether each cell is terrestrial or a satellite (and if a satellite, its orbital plane).

The analyzer 314 may prioritize a handover to the terrestrial base station 230 even if the one or more KPI values are greater with the first satellite 302 (e.g., the RSRP of the first set of synchronization signals has a greater value than the RSRP of the second set of synchronization signals) - based on the terrestrial base station 230 being characterized as terrestrial and the first satellite 302 being characterized as a satellite. In aspects, the analyzer 314 may implement the prioritized handover by decreasing a handover threshold for the terrestrial base station 230 based on a determination that the terrestrial base station 230 is associated with a terrestrial RAN, wherein decreasing the handover threshold causes the one or more KPI values of the second set of synchronization signals (from the terrestrial base station 230) to exceed the handover threshold. Further, the analyzer 314 may utilize any one or more criteria for making a handover decision described herein with respect to cell selection (e.g., a PLMN of the terrestrial base station 230 and/or the PLMN of the first satellite 302, a delta threshold between the one or more KPIs, and a minimum KPI threshold for the terrestrial base station 230). In aspects where the UE 206 only observes the first satellite 302 and the second satellite 306, the analyzer 314 may prioritize handover to the first satellite 302 based on a determination that the first satellite 302 has a lower orbital plane than the second satellite 306 (e.g., the first satellite 302 is in LEO and the second satellite 306 is in HEO). Once the analyzer 314 makes the handover decision, the controller 316 may communicate a handover instruction to the UE 206 that causes the UE 206 to be handed over (i.e., connect) to the terrestrial base station 230.

When connected to the terrestrial base station 230, the UE 206 may be instructed to remain camped on the terrestrial base station 230 (i.e., not handover to the first satellite 302) in contrast to conventional handover criteria (e.g., even if the connection with the first satellite 302 is better and/or the first satellite 302 is less congested). In such a circumstance, the UE 206 may process one or more synchronization signals to determine a cell identifier and one or more KPI values of a set of synchronization signals for its serving cell (the terrestrial base station 230) and at least one neighboring cell, such as the first satellite 302. That is, the UE 206 may communicate the measurement report to the receiver 312 of the handover engine 310, wherein the measurement report comprises a serving cell identifier associate with a first radio access network (RAN) node, one or more key performance indicator (KPI) values (e.g., a first RSRP value) of a first set of synchronization signals received by the UE from the first RAN node, a neighboring cell identifier associated with a second RAN node, and one or more KPI values (e.g., a second RSRP value) of a second set of synchronization signals received by the UE from the second RAN node. In response, the analyzer 314 of the handover engine 310 may compare the one or more KPI values for the first satellite 302 and the terrestrial base station 230 as well as determine whether each cell is terrestrial or a satellite (and if a satellite, its orbital plane).

The analyzer 314 may de-prioritize a handover to the first satellite 302 even if the one or more KPI values are greater with the first satellite 302 (e.g., the RSRP of the first set of synchronization signals has a greater value than the RSRP of the second set of synchronization signals) - based on the terrestrial base station 230 being characterized as terrestrial and the first satellite 302 being characterized as a satellite. In aspects, the analyzer 314 may implement the prioritized handover by increasing a handover threshold for the first satellite 302 based on a determination that the first satellite 302 is associated with a satellite RAN, wherein increasing the handover threshold causes the one or more KPI values of the second set of synchronization signals (from the first satellite 302) to be below the handover threshold. Further, the analyzer 314 may utilize any one or more criteria for deciding the UE 206 should not be handed over described herein with respect to cell selection (e.g., a PLMN of the terrestrial base station 230 and/or the PLMN of the first satellite 302, a delta threshold between the one or more KPIs, and a minimum KPI threshold for the terrestrial base station 230). In aspects where the UE 206 only observes the first satellite 302 and the second satellite 306, the analyzer 314 may de-prioritize handover from the first satellite 302 to the second satellite 306 based on a determination that the first satellite 302 has a lower orbital plane than the second satellite 306 (e.g., the first satellite 302 is in LEO and the second satellite 306 is in HEO). Once the analyzer 314 makes the handover decision, the controller 316 may communicate a handover instruction to the UE 206 that causes the UE 206 to be remain connected to (camped on) its serving cell.

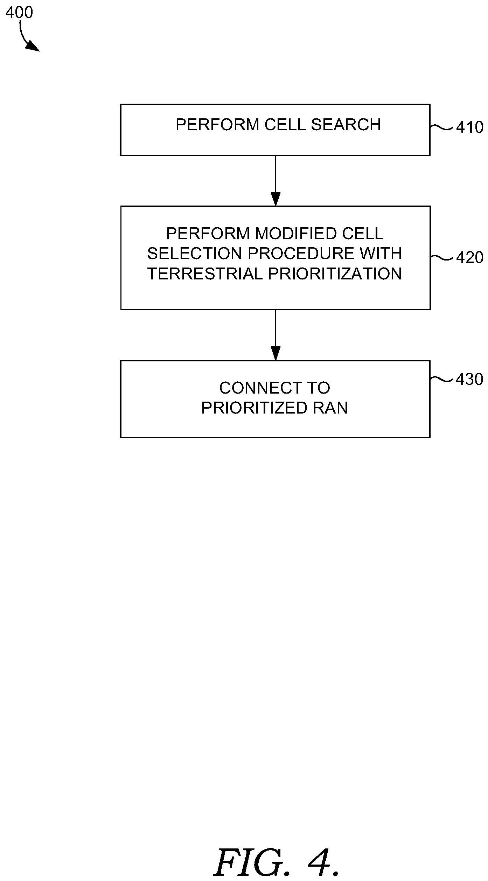

Turning now to Fig. 4, a flow chart representing a method 400 is provided for prioritizing terrestrial base stations during cell selection. At a first step 410, a UE, such as the first UE 206 of Figs. 2-3, performs a cell search wherein the UE acquires and measures one or more synchronization signals from each of a first RAN node and a second RAN node, according to any one or more aspects described with respect to Figs. 2-3. At a second step 420, the UE performs a modified cell selection procedure that prioritizes connection to a terrestrial base station over a satellite and prioritizes satellites in lower orbital planes over satellites in higher orbital planes, according to any one or more aspects described with respect to Figs. 2-3. At a third step 430, the UE connects to the prioritized RAN, for example by way of communicating a registration request to the prioritized RAN, according to any one or more aspects described with respect to Figs. 2-3.

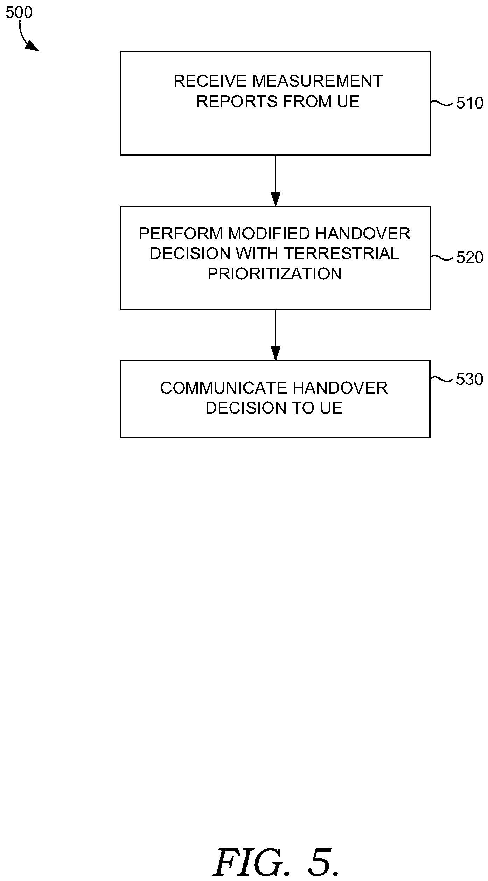

Turning now to Fig. 5, a flow chart representing a method 500 is provided for prioritizing terrestrial RAN nodes during handover. At a first step 510, a measurement report is received from a UE, such as the UE 206 of Figs. 2-3, indicating one or more KPI values for each of a first RAN node and a second RAN node, according to any one or more aspects described with respect to Figs. 2-3. At a second step 520, a modified handover decision criteria is used to make a handover decision for the UE, wherein the modified handover decision criteria prioritizes connection to a terrestrial base station over a satellite and prioritizes satellites in lower orbital planes over satellites in higher orbital planes, according to any one or more aspects described with respect to Figs. 2-3. At a third step 530, a handover decision is communicated to the UE, according to any one or more aspects described herein.

Many different arrangements of the various components depicted, as well as components not shown, are possible without departing from the scope of the claims below. Embodiments in this disclosure are described with the intent to be illustrative rather than restrictive. Alternative embodiments will become apparent to readers of this disclosure after and because of reading it. Alternative means of implementing the aforementioned can be completed without departing from the scope of the claims below. Certain features and subcombinations are of utility and may be employed without reference to other features and subcombinations and are contemplated within the scope of the claims

In the preceding detailed description, reference is made to the accompanying drawings which form a part hereof wherein like numerals designate like parts throughout, and in which is shown, by way of illustration, embodiments that may be practiced. It is to be understood that other embodiments may be utilized and structural or logical changes may be made without departing from the scope of the present disclosure. Therefore, the preceding detailed description is not to be taken in the limiting sense, and the scope of embodiments is defined by the appended claims and their equivalents.

## Claims

1. A system for multi-domain cell selection, the system comprising:
one or more antennas configured to wirelessly communicate with a terrestrial base station and one or more satellites; and
one or more computer processing components configured to perform operations comprising:
receiving a first set of synchronization signals from a first radio access network (RAN) node;
receiving a second set of synchronization signals from a second RAN node;
determining that each of the first RAN node and the second RAN node are suitable; and
communicate a registration request to the second RAN node based at least in part on a determination that the first RAN node is associated with a satellite RAN and the second RAN node is associated with a terrestrial RAN.

2. The system of claim 1, wherein determining that the first RAN node is associated with a satellite RAN and the second RAN node is associated with a terrestrial RAN is based on a determination that a first PLMN of the first RAN node is associated with the satellite RAN and that a second PLMN of the of the second RAN node is associated with the terrestrial RAN.

3. The system of claim 2, wherein a first set of key performance indicator (KPI) values of the first set of synchronization signals is greater than a second set of KPI values of the second set of synchronization signals.

4. The system of claim 3, wherein each of the first set of KPI values and the second set of KPI values comprise a reference signal receive power, RSRP, and a reference signal receive quality, RSRQ.

5. The system of claim 4, wherein a delta between the first set of values and the second set of values is less than a predetermined threshold, wherein the first RAN node is in low earth orbit.

6. The system of claim 5, wherein the one or more computer processing components are further configured to:
receive a third set of synchronization signals from a third RAN node;
determine the third RAN node is suitable;
determine a third set of KPI values of the third set of synchronization signals is greater than each of the first set of KPI values and the second set of KPI values.

7. A method for controlling handovers in a cellular telecommunications network, the method comprising:
receiving a measurement report from a user equipment (UE), the measurement report comprising a serving cell identifier associate with a first radio access network (RAN) node, one or more key performance indicator (KPI) values of a first set of synchronization signals received by the UE from the first RAN node, a neighboring cell identifier associated with a second RAN node, and one or more KPI values of a second set of synchronization signals received by the UE from the second RAN node;
determining the one or more KPI values of the first set of synchronization signals is greater than the one or more KPI values of the second set of synchronization signals; and
communicating a handover instruction to the UE, the handover instruction comprising an indication to the UE to connect to the neighboring cell based at least on a determination that the first RAN node is associated with a satellite RAN.

8. The method of claim 7, wherein the first RAN node is associated with a low earth orbit RAN and the second RAN node is associated with a terrestrial RAN.

9. The method of claim 8, wherein the terrestrial RAN is associated with a home public land mobile network (PLMN) of the UE.

10. The method of claim 8, wherein the one or more KPI values comprises a reference signal receive power, RSRP, wherein a difference between the one or more KPI values of the first set of synchronization signals and the one or more KPI values of the second set of synchronization signals is less than a predetermined maximum delta threshold, wherein the one or more KPI values of the second set of synchronization signals is greater than a predetermined minimum threshold.

11. The method of claim 8, wherein each of the low earth orbit RAN and the terrestrial RAN is associated with a roaming PLMN of the UE.

12. The method of claim 7, wherein the first RAN node is associated with first RAN having a high orbital plane than a second RAN associated with the second RAN node.

13. A method for controlling handovers in a cellular telecommunications network, the method comprising:
receiving a measurement report from a user equipment, UE, the measurement report comprising a serving cell identifier associate with a first radio access network, RAN, node, a first reference signal receive power, RSRP, value of a first set of synchronization signals received by the UE from the first RAN node, a neighboring cell identifier associated with a second RAN node, and a second RSRP value of a second set of synchronization signals received by the UE from the second RAN node, wherein the second RSRP value is greater than the first RSRP value; and
implementing a modified handover procedure based at least in part on a determination that the second RAN node is associated with a satellite RAN, the modified handover procedure causing the UE to remain camped on the first RAN node despite the second RSRP value being greater than the first RSRP value.

14. The method of claim 13, wherein the modified handover procedure comprises increasing, based on a determination that the second RAN node is associated with the satellite RAN, an offset value that is used at least in part with the second RSRP value to determine a cell selection receive level value for the second RAN node, and wherein increasing the offset value causes the cell selection receive level value to be below a predetermined handover threshold.

15. The method of claim 13, wherein:
the first RAN is associated with a terrestrial RAN; or
the first RAN is associated with a home public land mobile network of the UE; or
the first RAN is associated with a first satellite constellation and the second RAN is associated with a second satellite constellation, the first satellite constellation having a lower orbital plane than the second satellite constellation.
